# EUROPÄISCHE PATENTSCHRIFT

(11) **EP 2 655 109 B1**
(45) Veröffentlichungstag und Bekanntmachung des Hinweises auf die Patenterteilung: **03.10.2018**
(21) Anmeldenummer: 11822801.4
(22) Anmeldetag: 25.11.2011
(51) Int. Cl.: B60J 1/00, B60J 10/70

(54) **BEFESTIGUNG EINER MIT EINEM UMSPRITZTEN RANDPROFIL AUSGERÜSTETEN GLASSCHEIBE, INSBESONDERE AUTOMOBILGLASSCHEIBE**
FIXATION OF A VEHICLE WINDOW PANE HAVING A STRIP AT ITS END TO A FRAME PART
FIXATION D'UNE VITRE DE VÉHICULE MUNIE D'UN MOULAGE SUR UN CADRE

(30) Priorität: 21.12.2010 DE 202010016886 U
(43) Veröffentlichungstag der Anmeldung: 30.10.2013
(73) Patentinhaber: Henniges Automotive GmbH & Co. KG, 31547 Rehburg Loccum (DE)
(72) Erfinder: KREYE, Bernhard, 31515 Wunstorf (DE)
(74) Vertreter: Jabbusch, Matthias
(86) Internationale Anmeldenummer: PCT/DE2011/002039
(87) Internationale Veröffentlichungsnummer: WO 2012/083911

(56) Entgegenhaltungen:
- EP-A2- 0 304 694
- WO-A1-2011/006458
- DE-A1- 3 605 750
- DE-A1- 3 742 881
- FR-A1- 2 894 865
- US-A- 4 591 203
- US-A- 4 723 809

## Beschreibung

Befestigungsanordnung mit einer Fensteröffnung und mit einer mit einem umspritzten Randprofil ausgerüsteten Glasscheibe, insbesondere Automobilglasscheibe, zur Befestigung in der Fensteröffnung

Die Neuerung bezieht sich auf eine Befestigungsanordnung mit einer Fensteröffnung und mit einer mit einem umspritzten Randprofil ausgerüsteten Glasscheibe, insbesondere Automobilglasscheibe, in der dafür vorgesehenen Fensteröffnung, vorzugsweise einer Fensteröffnung in einer Automobilkarosserie.

Mit Rand- oder Einfassungsprofilen ausgerüstete Automobilglasscheiben haben den Vorteil, dass sie, einbaufertig vorbereitet, am Einbauort im Automobilwerk bereitgestellt werden können. Die Befestigung in der Fensteröffnung der Automobilkarosserie erfolgt mit geeigneten Klebern, die, zwecks Montagevereinfachung, auch maschinell, zum Beispiel mit Robotern, aufgetragen werden können. Die vorbereitete Glasscheibe ist lediglich noch auszurichten und in das aufgetragene Klebebett zu drücken.

Damit die Scheibe vorschriftsmäßig in der Fensteröffnung sitzt, ist besondere Sorgfalt auf ihre Ausrichtung zu richten. Das eigentliche Ausrichten darf nicht zu viel Zeit in Anspruch nehmen, da andernfalls der Kleber bereits anfängt abzubinden. Eine Handhabung von eine einwandfreie Ausrichtung gewährleistenden Hilfsmitteln erfordert jedoch entsprechenden Zeitaufwand, zumal dann, wenn er von Arbeitskräften auszuführen und zu kontrollieren ist.

Der Neuerung liegt die Aufgabe zugrunde, die Befestigung einer mit einem umspritzten Randprofil ausgerüsteten Automobilglasscheibe in einer Fensteröffnung in einer Automobilkarosserie zu vereinfachen und dadurch zu beschleunigen.

Diese Aufgabe ist neuerungsgemäß durch die Merkmale des Patentanspruchs 1 gelöst. Weiterbildungen und vorteilhafte Ausgestaltungen der Neuerung ergeben sich aus den Ansprüchen 2 bis 7.

Dadurch, dass das umspritzte Randprofil bei seiner Herstellung ausgeformte Rastvorsprünge aufweist, die jeweils mit im Randbereich der Fensteröffnung angeordneten Rastlöchern, insbesondere im Blech der Automobilkarosserie angeordneten Rastlöchern, schnappverbunden sind, ist die Automobilglasscheibe in der ihr zugeordneten Fensteröffnung der Automobilkarosserie ausgerichtet und fixiert, sobald die an dem umspritzten Randprofil der Glasscheibe vorhandenen Rastvorsprünge in die Rastlöcher eingerastet sind. Dies erfolgt durch einfaches Andrücken der Glasscheibe mit ihrem Randprofil an die Automobilkarosserie, derart, dass die Rastvorsprünge in die Rastlöcher einrasten. Dadurch ist die gesamte Glasscheibe mit ihrer Umrahmung in der Fensteröffnung in der dafür vorgesehenen Position festgelegt. Dieser Vorgang des Andrückens der Glasscheibe, bis die Rastvorsprünge in die Rastlöcher eingeschnappt sind, erfordert wenig Montagezeit.

Sobald die Glasscheibe mit dem im Bereich der Fensteröffnung aufgetragenen Kleber, beispielsweise auf einen Flansch der Automobilkarosserie aufgetragenen Kleber, in Kontakt gekommen ist, beginnt die Aushärtung des Klebers, womit die positionierte Glasscheibe letztendlich in der Automobilkarosserie befestigt ist, sobald der Kleber ausgehärtet ist.

Erfindungsgemäß weist jeder Rastvorsprung die Form eines Quaders auf, der aus der jeweiligen Oberfläche des Randprofils vorsteht. Erfindungsgemäß ist jedes Rastloch ein etwa rechteckiges Langloch. Diese Rechteckform erleichtert das präzise Ausrichten der zu positionierenden Glasscheibe in der Fensteröffnung einer Automobilkarosserie. Außerdem hat die Formgebung der Rastvorsprünge und der zu ihr passenden Rastlöcher den Vorteil, dass die Anzahl der Rastlöcher in der Karosserie und der Rastvorsprünge an der Glasscheibe auf ein Minimum reduziert werden kann. Besonders vorteilhaft ist eine lediglich nur drei Rastprofile und entsprechend drei Rastlöcher umfassende Befestigung, durch die eine Dreipunktbefestigung gebildet ist, die hinsichtlich der Auflage der Glasscheibe in einer Ebene statische Vorteile bietet.

Dadurch, dass erfindungsgemäß jeder Rastvorsprung die Form eines Quaders aufweist und aus der jeweiligen Oberfläche des Randprofils vorsteht, und dass jedes Rastloch ein etwa rechteckiges Langloch ist, wobei die Längsachse jedes Rastvorsprunges und jedes Rastloches parallel zu dem mit dem Randprofil umspritzten Außenrand der Glasscheibe ausgerichtet ist, sitzt die Glasscheibe optimal in der Fensteröffnung, sobald die quaderförmigen Rastprofile mit den als rechteckige Langlöcher ausgebildeten Rastlöchern verrastet sind.

Diese Verrastung wird dadurch ermöglicht, dass das freie Ende jedes Rastvorsprunges den Öffnungsrand des jeweiligen Rastloches im Blech der Karosserie übergreifende Schnappnasen aufweist. Wird der Rastvorsprung mit entsprechendem Kraftaufwand in das Rastloch gedrückt, können sich die Schnappnasen verformen, wodurch das Einschnappen in die Rastlöcher gewährleistet ist.

Die Verformung des Rastvorsprunges, durch die dieses vorbeschriebene Einschnappen ermöglicht ist, wird dadurch erleichtert, dass jeder Rastvorsprung in dem Bereich seines freien Endes eine parallel zu seiner Längsachse verlaufende Hohlkammer aufweist. Die Hohlkammer begrenzenden Außenlängswände weisen im Bereich ihres oberen freien Randes angeformte, die Schnappnasen ausbildende Schnappwülste auf, welche die Außenlängswand der Hohlkammer bei einem Eindrücken des Rastvorsprunges in ein Rastloch biegeelastisch verformen können. Durch die Elastizität springen die Schnappnasen in ihre ursprüngliche Position zurück, sodass die Rastvorsprünge mit den Rastlöchern verrastet sind.

Die vorteilhafte Verrastung wird insbesondere dadurch ermöglicht, dass der Werkstoff für die Randprofile mit ihren Rastvorsprüngen ein Elastomer ist. Das Elastomer weist bevorzugt eine Shore-Härte von 50 bis 90 Shore A auf.

Ein Ausführungsbeispiel, aus dem sich weitere neuerungsgemäße Merkmale ergeben, ist in der Zeichnung dargestellt. Es zeigen:
- Fig. 1:: eine Seitenansicht des hinteren Bereichs eines Automobils, in dessen eine Heckseitenscheibe bildende Fensteröffnung mit einem Randprofil ausgerüstete Glasscheibe gesetzt ist;
- Fig. 2:: eine Seitenansicht der Heckseitenscheibe gemäß Fig. 1;
- Fig. 3:: eine Ansicht im Schnitt entlang der Linie A-A in Fig. 2; und
- Fig. 4:: eine Ansicht im Schnitt entlang der Linie B-B in Fig. 2 und in Fig. 3

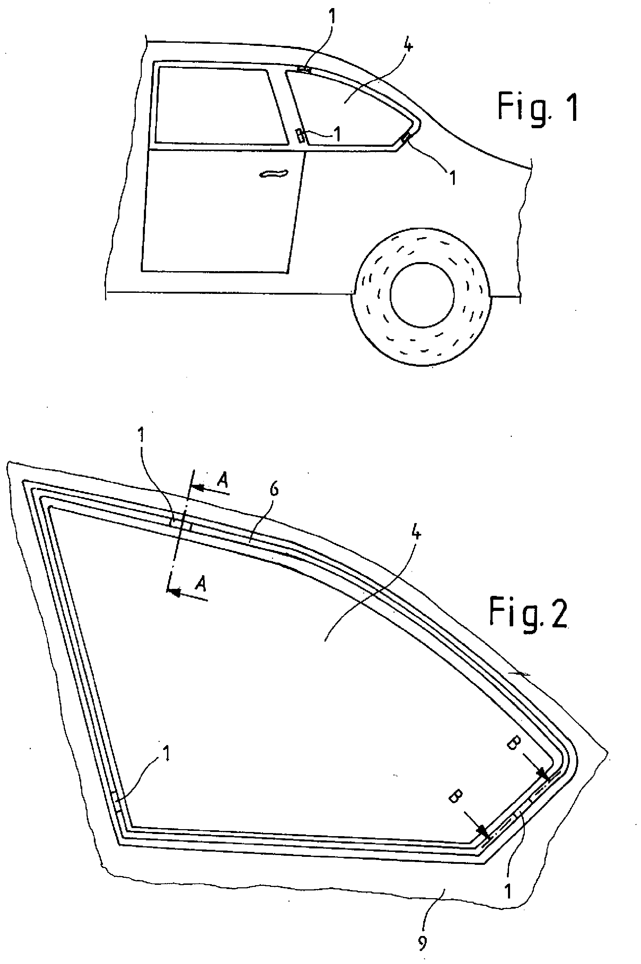

In Fig. 1 ist in einer schematischen Seitenansicht der hintere Bereich einer Automobilkarosserie dargestellt, die eine Fensteröffnung aufweist, in die eine Automobilglasscheibe 4 eingesetzt ist. Die Automobilglasscheibe ist mit einem Randprofil 6 aus einem Elastomer umspritzt, das an vorbestimmten Stellen mit einteilig ausgebildeten, zusammen mit den umspritzten Randprofil ausgeformten Rastvorsprüngen 1 ausgerüstet ist.

Fig. 2 zeigt die Glasscheibe 4 mit dem umspritzten Randprofil 6, das mit dem Randprofil zusammen ausgeformte Rastvorsprünge 1 aufweist, in einer Seitenansicht.

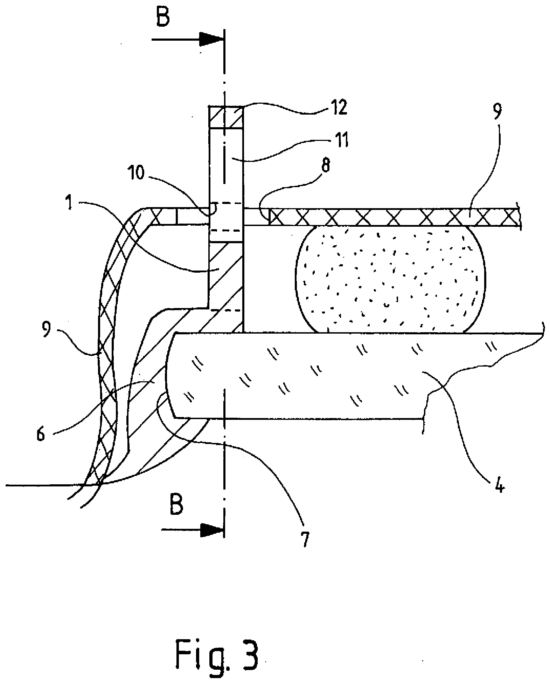

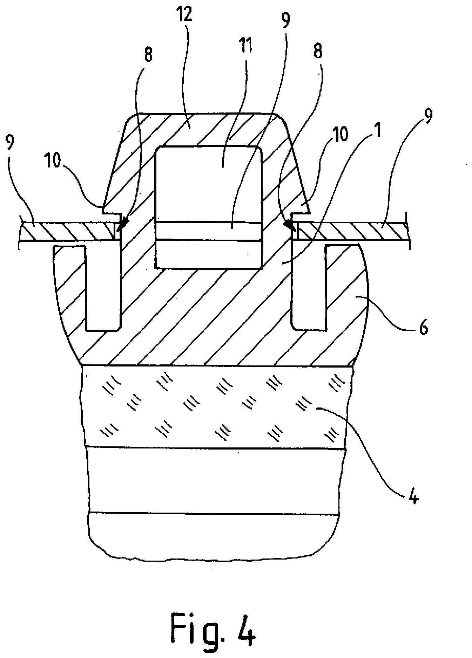

In Fig. 3 ist eine Ansicht eines Schnittes A-A in Fig. 2 dargestellt. Gleiche Bauteile sind mit gleichen Bezugszahlen bezeichnet. Fig. 3 verdeutlicht, insbesondere in Verbindung mit Fig. 4 wie das Randprofil 6 um den Außenrand 7 der Glasscheibe 4 gespritzt ist. Der rechteckige und damit die Form eines Quaders aufweisende Rastvorsprung 1 weist an seinem freien Ende den Öffnungsrand des jeweiligen Rastloches 8 im Blech 9 der Karosserie übergreifende Schnappnasen 10 auf. Jeder Rastvorsprung 1 weist in dem Bereich seines freien Endes eine parallel zu seiner Längsachse verlaufende Hohlkammer 11 auf, wodurch im oberen Bereich ein versteifender Steg 12 ausgebildet ist. Der Steg erschwert ein Lösen der befestigten Glasscheibe. Ein angedeuteter Klebstoffauftrag für eine Verbindung zwischen Glasscheibe 4 und Karosserieblech 9 ist mit 13 bezeichnet.

Die Hohlkammer begrenzende Außenlängswände weisen im Bereich ihres oberen freien Randes die angeformten, die Schnappnasen 10 ausbildenden Schnappwülste auf.

Der Werkstoff für die Randprofile 6 mit den Rastvorsprüngen 1 ist ein Elastomer, dass eine Shore-Härte von 50 bis 90 Shore A aufweist.

Fig. 4 zeigt eine Ansicht eines Schnittes B-B in Fig. 2 und in Fig. 3, gleiche Bauteile sind wiederum mit gleichen Bezugszahlen bezeichnet.

## Patentansprüche

1. Befestigungsanordnung mit einer Fensteröffnung und mit einer mit einem umspritzten Randprofil ausgerüsteten Glasscheibe, insbesondere Automobil-Glasscheibe, zur Befestigung in der Fensteröffnung, vorzugsweise einer Fensteröffnung in einer Automobil-Karosserie, wobei das umspritzte Randprofil bei seiner Herstellung mit ausgeformte Rastvorsprünge aufweist, die jeweils mit im Randbereich der Fensteröffnung angeordneten Rastlöchern, insbesondere im Blech der Automobil-Karosserie angeordneten Rastlöchern, schnappverbunden sind,
**dadurch gekennzeichnet,**
**dass** jeder Rastvorsprung (1) die Form eines Quaders aufweist und aus der jeweiligen Oberfläche des Randprofils (6) vorsteht, und dass jedes Rastloch (8) ein etwa rechteckiges Langloch ist, wobei die Längsachse jedes Rastvorsprunges (1) und jedes Rastloches (8) parallel zu dem mit dem Randprofil (6) umspritzten Außenrand der Glasscheibe (4) ausgerichtet ist.

2. Befestigungsanordnung nach Anspruch 1, **dadurch gekennzeichnet, dass** das freie Ende jedes Rastvorsprunges (1) den Öffnungsrand des jeweiligen Rastloches (8) im Blech (9) der Karosserie übergreifende Schnappnasen (10) aufweist.

3. Befestigungsanordnung nach einem der Ansprüche 1 bis 2, **dadurch gekennzeichnet, dass** jeder Rastvorsprung (1) in dem Bereich seines freien Endes eine parallel zu seiner Längsachse verlaufende Hohlkammer (11) aufweist.

4. Befestigungsanordnung nach Anspruch 3, **dadurch gekennzeichnet, dass** die Hohlkammer (11) begrenzende Außenlängswände im Bereich ihres oberen freien Randes angeformte, die Schnappnasen (10) ausbildende Schnappwülste aufweist.

5. Befestigungsanordnung nach einem der Ansprüche 1 bis 4, **dadurch gekennzeichnet, dass** der Werkstoff für das Randprofil (6) mit den Rastvorsprüngen (1) ein Elastomer ist.

6. Befestigungsanordnung nach Anspruch, **dadurch gekennzeichnet, dass** das Elastomer eine Shorehärte von 50 bis 90 Shore A aufweist.

7. Befestigungsanordnung nach einem der Ansprüche 1 bis 6, **dadurch gekennzeichnet, dass** jeder Rastvorsprung (1) einen von der Oberfläche des Profilrahmens (6) aufsteigenden Schaft und an das freie Ende des Schaftes angeformte Schnappnasen (10) ausbildende Schnappwülste aufweist.

## Claims

1. A securing arrangement with a window opening and with a pane of glass equipped with an insert-moulded edge section, in particular a pane of glass for an automobile, for securing in the window opening, preferably a window opening in an automobile body, wherein the insert-moulded edge section has catch protrusions that are co-formed during its production and which are snap-connected respectively with catch holes arranged in the edge region of the window opening, in particular catch holes arranged in the sheet metal of the automobile body,
**characterized in that**
each catch protrusion (1) has the shape of a cuboid and projects from the respective surface of the edge section (6), and that each catch hole (8) is an approximately rectangular elongated hole, wherein the longitudinal axis of each catch protrusion (1) and each catch hole (8) is aligned parallel to the outer edge of the pane of glass (4) insert-moulded with the edge section (6).

2. The securing arrangement according to Claim 1, **characterized in that** the free end of each catch protrusion (1) has snap noses (10) engaging over the opening edge of the respective catch hole (8) in the sheet metal (9) of the body.

3. The securing arrangement according to one of Claims 1 to 2, **characterized in that** each catch protrusion (1) has, in the region of its free end, a hollow chamber (11) running parallel to its longitudinal axis.

4. The securing arrangement according to Claim 3, **characterized in that** outer longitudinal walls delimiting the hollow chamber (11) have snap beads forming the snap noses (10) formed on in the region of the upper free edge thereof.

5. The securing arrangement according to one of Claims 1 to 4, **characterized in that** the material for the edge section (6) with the catch protrusions (1) is an elastomer.

6. The securing arrangement according to Claim [...], **characterized in that** the elastomer has a Shore hardness of 50 to 90 Shore A.

7. The securing arrangement according to one of Claims 1 to 6, **characterized in that** each catch protrusion (1) has a shaft rising from the surface of the section frame (6) and snap beads forming snap noses (10) formed onto the free end of the shaft.

## Revendications

1. Système de fixation avec une ouverture de fenêtre et avec une vitre munie d'un surmoulage sur cadre, notamment vitre de véhicule automobile, pour fixation dans l'ouverture de fenêtre, de préférence une ouverture de fenêtre dans une carrosserie automobile, le surmoulage sur cadre comportant lors de sa fabrication des saillies d'encliquetage conformées, qui sont respectivement reliées par déclic à des trous d'encliquetage disposés dans la zone de bordure de l'ouverture de fenêtre, notamment dans des trous d'encliquetage disposés dans la tôle de la carrosserie automobile, **caractérisé en ce que** chaque saillie d'encliquetage (1) présente la forme d'un parallélépipède et fait saillie de la surface respective du cadre (6) et **en ce que** chaque trou d'encliquetage (8) est un trou oblong à peu près rectangulaire, l'axe longitudinal de chaque saillie d'encliquetage (1) et chaque trou d'encliquetage (8) étant orienté parallèlement au bord extérieur de la vitre (4) surmoulé au cadre (6).

2. Système de fixation selon la revendication 1, **caractérisé en ce que** l'extrémité libre de chaque saillie d'encliquetage (1) comporte des taquets encliquetables (10) recouvrant le bord d'ouverture du trou d'encliquetage respectif (8) dans la tôle (9) de la carrosserie.

3. Système de fixation selon l'une quelconque des revendications 1 à 2, **caractérisé en ce que** chaque saillie d'encliquetage (1) comporte dans la zone de son extrémité libre une chambre creuse (11) passant parallèlement à son axe longitudinal.

4. Système de fixation selon la revendication 3, **caractérisé en ce que** les parois longitudinales extérieures délimitant la chambre creuse (11) comportent dans la zone de leur bord libre supérieur, des bourrelets d'encliquetage constituant les taquets d'encliquetage (10).

5. Système de fixation selon l'une quelconque des revendications 1 à 4, **caractérisé en ce que** le matériau pour le cadre (6) avec les saillies d'encliquetage (1) est un élastomère.

6. Système de fixation selon la revendication [...], **caractérisé en ce que** l'élastomère présente une dureté Shore de 50 à 90 Shore A.

7. Système de fixation selon l'une quelconque des revendications 1 à 6, **caractérisé en ce que** chaque saillie d'encliquetage (1) comporte une tige s'élevant de la surface du cadre profilé (6) et des bourrelets d'encliquetage constituant des taquets d'encliquetage (10) conformés à l'extrémité libre de la tige.
